(19) Europäisches Patentamt

European Patent Office

Office européen des brevets

(11) **EP 0 771 588 B1**

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(51) Int. Cl.$^6$: **B01J 8/02**

(21) Anmeldenummer: **96112853.5**

(22) Anmeldetag: **09.08.1996**

(54) **Vorrichtung zur Beaufschlagung einer Festkörperschüttung mit gasförmigen Stoffen**

Apparatus for feeding gazeous substances into a fixed bed

Dispositif pour l'introduction dans un lit fixe de substances gazeuses

(84) Benannte Vertragsstaaten:
**BE CH DE DK FR GB IT LI NL**

(30) Priorität: **31.10.1995 DE 19540537**

(43) Veröffentlichungstag der Anmeldung:
**07.05.1997 Patentblatt 1997/19**

(73) Patentinhaber: **Krupp Uhde GmbH**
**44141 Dortmund (DE)**

(72) Erfinder: **Marsch, Hans-Dieter**
**44139 Dortmund (DE)**

(74) Vertreter:
**Patentanwälte**
**Meinke, Dabringhaus und Partner**
**Westenhellweg 67**
**44137 Dortmund (DE)**

(56) Entgegenhaltungen:
**DD-A- 301 873**          **JP-A- 54 016 947**
**US-A- 3 007 779**

**Beschreibung**

Die Erfindung richtet sich auf eine Vorrichtung zur Beaufschlagung einer Festkörperschüttung mit einem gasförmigen Fluid durch die Schüttung von innen nach außen, der im Oberbegriff des Anspruches 1 angegebenen Gattung.

Derartige hohlzylindrische Katalysatorbetten sind bekannt, hier sei als Beispiel auf die EP-B-0 158 130 der Anmelderin verwiesen. Hier wird nach einem dortigen Ausführungsbeispiel ein hohlzylindrisches Katalysatorbett von innen angeströmt, allerdings stellt die dortige Konstruktion nicht sicher, daß die Anströmung über die gesamte Höhe des Katalysatorbettes gleich intensiv bzw. gleichmäßig erfolgt. Zwar läßt diese bekannte Konstruktion schon zu, zu- und abströmendes Gas in der gleichen Richtung zu führen, was dort durch eine U-förmige Strömung erreicht wird. Dabei ist der Querschnitt des Ringraumes für das abströmende Reaktionsgas gleich oder größer zu wählen als der Querschnitt des Ringraumes für das axial zuströmende Frischgas.

Diese Maßnahme reicht aber alleine nicht aus, da die axiale Zuströmgeschwindigkeit dort nicht zu hoch sein darf. Im dortigen Beispiel beträgt sie nur 4,83 m/sec. Niedrige Geschwindigkeiten haben aber den Nachteil notwendiger größerer Querschnitte.

Die EP-A-0 446 592 zeigt eine profilierte Wandstruktur mit wenigen Bohrungen zur Druckverlust-Erzeugung, derart, daß hinter den Bohrungen vor Eintritt in das Katalysatorbett der gleiche Druck herrschen soll. Dabei wird das Katalysatorbett von einer zweiten gasdurchlässigen Wandstruktur umschlossen, die, wenigstens bereichsweise, an der ersten anliegt.

Ein Nachteil dieser bekannten Lösungen besteht allerdings darin, daß der aus den Bohrungen austretende Strahl eine hohe Geschwindigkeit hat, mit der er zumindest teilweise auf die den Katalysator umhüllende gasdurchlässige Wandstruktur trifft und auch auf singuläre Katalysatorbereiche selbst. Dort wo die Wandstrukturen aneinander anliegen ist ein Anströmen des Katalysators nicht möglich, so daß es zu einer gleichmäßigen Gasverteilung wenn überhaupt erst in einer bestimmten Tiefe der Katalysatorschicht kommt.

In der gattungsbildenden DD-A-301 873 ist ein Reaktor mit rieselfähigem Katalysatormaterial beschrieben, wobei das Katalysatorbett alternativ von innen nach außen durchströmbar ist. Im Inneren des Katalysatorkorbes ist ein als Strömungsleitkörper ausgebildeter Verdrängungskörper vorgesehen, mit dem erreicht werden soll, daß die ansonsten undefinierten Strömungsbedingungen sich über die Höhe des Katalysatorkorbes vergleichmäßigen. Eine unmittelbare Beeinflussung auf die Anströmung des Katalysatorkorbes ist dort nicht vorgesehen, zumal der Schwerpunkt auf eine Durchströmung des Katalysatorkorbes von außen nach innen gerichtet ist und sich der Verdrängungskörper damit im stromabwärtigen Bereich befindet.

Aufgabe der Erfindung ist demgegenüber die Schaffung einer Lösung, bei der unter Beibehaltung der inneren Anströmung einer hohlzylindrischen Schüttung eine gleichmäßige Anströmung dieser radial von innen nach außen zu durchströmenden Schüttung erreicht wird.

Mit einer Vorrichtung der eingangs bezeichneten Art wird diese Aufgabe dadurch gelöst, daß das vertikale Gaszuführungsrohr mit wenigstens einer vertikal angeordneten Ausströmlochreihe auf Abstand zu der perforierten, zylindrischen Anströmfläche der Schüttung derart vorgesehen ist, daß zwischen Gaszuführungsrohr und Anströmfläche ein zylindrischer Ringraum gebildet ist, und daß im wesentlichen als die ausströmenden Gase ablenkende Leitbleche ausgebildete Leitelemente an bzw. über der Ausströmlochreihe zur Bildung einer im wesentlichen tangentialen Abströmung in den Ringraum vorgesehen sind.

Durch diese Art der Fluidführung wird erreicht, daß bei der axialen Zuführung des Mediums ein tangentiales Ausströmen in den frei von der Festkörperschüttung gehaltenen Ringraum erfolgt, so daß es dort zu einer sich ausbildenden Zirkulation des Fluids vor Eintritt in die Festkörperschüttung kommt. Damit läßt sich erreichen, daß über den gesamten Umfang ein gleicher Druck einstellbar ist, so daß es zu einer völlig gleichmäßigen Anströmung der Festkörperschüttung kommt. Auch ist es durch die Erfindung möglich, mit vergleichsweise hohen Austrittsgeschwindigkeiten des Fluids in den Ringraum zu arbeiten, ohne eine vorgegebene radiale Anströmgeschwindigkeit der Festkörperschüttung zu überschreiten.

Vorteilhafte Ausgestaltungen der Erfindung ergeben sich aus den Unteransprüchen.

Je nach Einsatz kann es auch vorteilhaft sein, die Leitbleche im wesentlichen halbkreisförmig zu gestalten, um unmittelbar hinter dem Austritt aus der Ausströmlochreihe einen Druckausgleichraum zu schaffen.

Alternativ dazu oder in Kombination kann auch vorgesehen sein, die Ausströmöffnungen in einem Anstellwinkel zum jeweiligen Radius in der Wand des Gaszuführungsrohres vorzusehen, so daß bereits durch die Schrägstellung der Ausströmöffnungen eine gewisse tangentiale Abströmung vorgenommen wird. Auch hier können weitere Ablenkbleche mit oder ohne Druckausgleichraum vorgesehen sein.

Zweckmäßig ist das Gaszuführungsrohr mit einer Mehrzahl von Ausströmlochreihen versehen, insbesondere mit zwei gegenüberliegenden Ausströmlochreihen. Um eine möglichst große Eintrittsfläche in die Festkörperschüttung zu ermöglichen, kann vorgesehen sein, die Schüttung als (für sich gesehen bekannte) Korbfläche auszubilden, es können aber auch in gleicher Weise perforierte Lochbleche oder mit einer Vielzahl von Bohrungen versehene Rohrflächen

2

vorgesehen sein.

Vorteilhaft ist es auch, wenn, wie dies die Erfindung vorsieht, das Volumen des Ringraumes derart bemessen ist, daß ein Vielfaches der pro Zeiteinheit zuströmenden Gasmenge im Ringraum pro Zeiteinheit rotieren kann.

Damit ergibt sich ein besonders guter Strömungsausgleich innerhalb des Ringraumes mit der Folge, daß die Anströmfläche der Festkörperschüttung äußerst gleichmäßig beaufschlagbar ist.

Eine Möglichkeit, dies zu erreichen, besteht darin, daß bei einer Vorrichtung mit einer tangential ausgerichteten schlitzförmigen Abgabeöffnung in den Ringraum die Dimensionierung des Ringraumes und des Schlitzes bzw. der Schlitze mit Hilfe der folgenden Funktion bestimmt wird:

$$\Gamma = \frac{\dot{V}_0}{1} \sqrt{\frac{r_a(r_0 + h_1)}{n \cdot h[r_a - (r_0 + h_1)]}} \qquad [m^2/s]$$

wobei

$\dot{V}_o$

$$\left[\frac{m^3}{s}\right]$$

das zuströmende Effektivvolumen des Mediums
$h$ [m]        Schlitzhöhe
$h_1$ [m]        Schlitzhöhe + Konstruktionsmaß, z.B. Dicke des Schlitzabdeckbleches,
$l$ [m]        Schlitzlänge
$n$ [-]        Anzahl der Schlitze
$r_a$ [m]        Außenradius des Ringraumes
$r_0$ [m]        Außenradius des Gaszuführungsrohres

ist.

Die Erfindung ist nachstehend anhand der Zeichnung beispielsweise näher erläutert. Diese zeigt in

Fig. 1        einen vertikalschnitt durch eine erfindungsgemäße Vorrichtung in vereinfachter Darstellung,

Fig. 2        einen vergrößerten vertikalschnitt aus einem Teilbereich der Vorrichtung gemäß Fig. 1 nach Linie II-II in Fig. 3,

Fig. 3        einen Schnitt etwa gemäß Linie III-III in Fig. 2,

Fig. 4        eine abgewandelte Detaildarstellung eines zentrischen Gaszuführungsrohres,

Fig. 5        einen Teilbereich einer Anströmfläche der Schüttung als Korbfläche in Aufsicht sowie in

Fig. 6        einen Schnitt gemäß Linie VI-VI in Fig. 5.

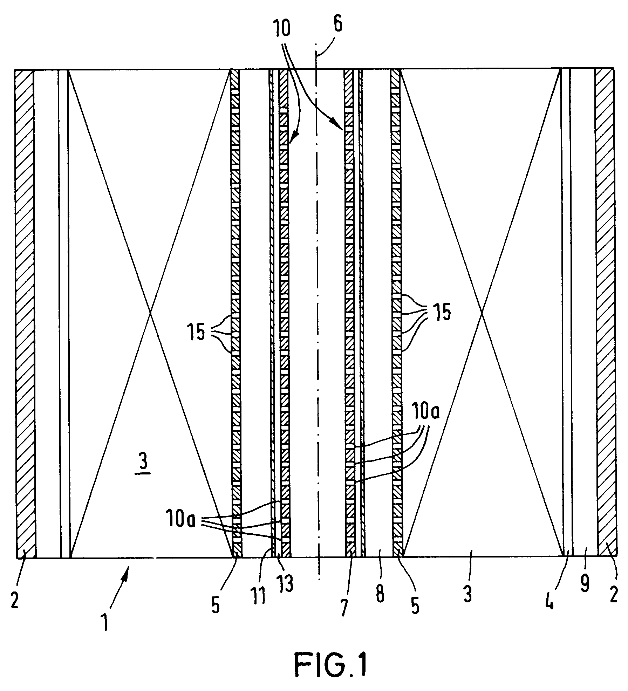

Die in den Figuren dargestellte, allgemein mit 1 bezeichnete Vorrichtung wird im wesentlichen, bezug nehmend auf Fig. 1, von außen nach innen von einem nur andeutungsweise wiedergegebenen, querschnittlich kreisförmigen Gefäß 2, einer konzentrisch darin angeordneten Festkörperschüttung 3 mit einem äußeren perforierten Rückhaltekorb 4 und einem inneren perforierten Rückhaltekorb 5 gebildet, wobei konzentrisch zu der mit 6 bezeichneten Mittelachse ein Gaszuführungsrohr 7 derart angeordnet ist, daß sich zum inneren Rückhaltekorb 5 ein Ringraum 8 ausbildet. Zwischen dem äußeren Rückhaltekorb 4 und Innenwandfläche des Gefäßes 3 ist ebenfalls ein Ringraum ausgebildet, der mit 9 bezeichnet ist.

Wie in den Figuren dargestellt, ist das zentrische, im beschriebenen Beispiel vertikal ausgerichtete Gaszuführungsrohr 7 mit zwei Ausströmlochreihen 10 ausgestattet, die Ausströmlöcher sind mit 10a beziffert.

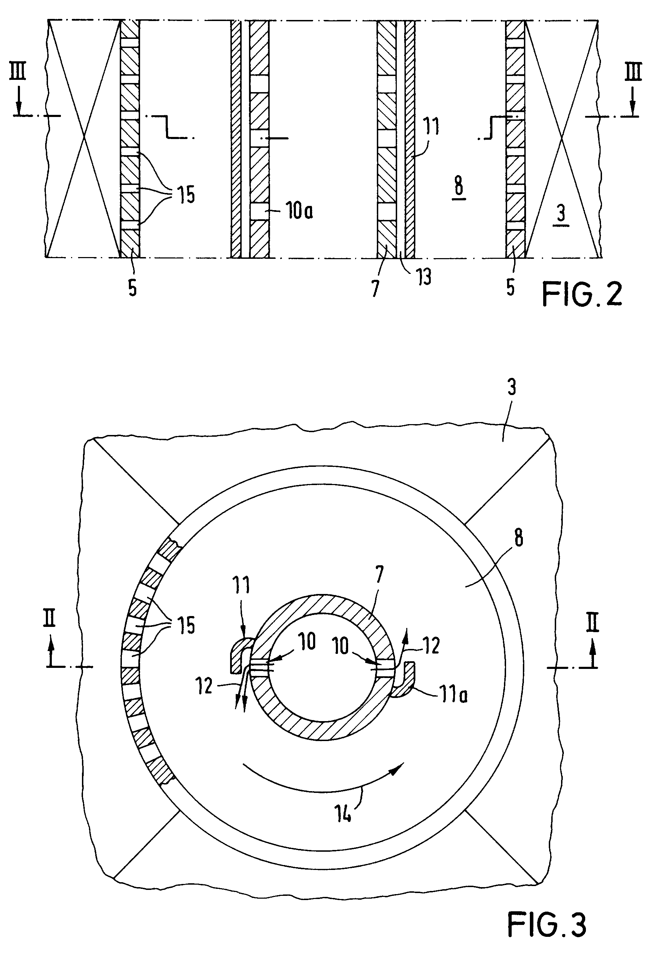

Wie sich insbesondere aus den Fig. 2 und 3 ergibt, sind die Lochreihen 10 im zentrischen Gaszuführungsrohr 7 von einem nach außen weisenden Leitelement 11 derart abgedeckt, daß sich beim Ausströmen eine relativ zum Gaszuführungsrohr 7 tangentiale Ausströmrichtung ergibt, was mit den Pfeilen 12 in Fig. 3 angedeutet ist.

Um die tangentiale Ausströmung 12 zu erreichen, sind im Beispiel der Fig. 3 die Leitelemente 11 je als einseitig angeschweißtes Blech 11a ausgebildet, derart, daß sich ein tangentialer Austrittspalt, in Fig. 1 mit 13 bezeichnet, ergibt. Durch diesen tangentialen Austritt wird im Ringraum 8 eine rotierende Strömung erzeugt, die mit dem Pfeil 14 in Fig. 3 angedeutet ist. Die in den Fig. 1 bis 3 lediglich andeutungsweise wiedergegebenen Eintrittsöffnungen bzw. Perforationen des inneren Rückhaltekorbes 5 sind mit 15 bezeichnet, die Ausnehmungen bzw. Perforationen im äußeren Rückhaltekorb 4 sind in der Fig. 1 nicht gesondert dargestellt.

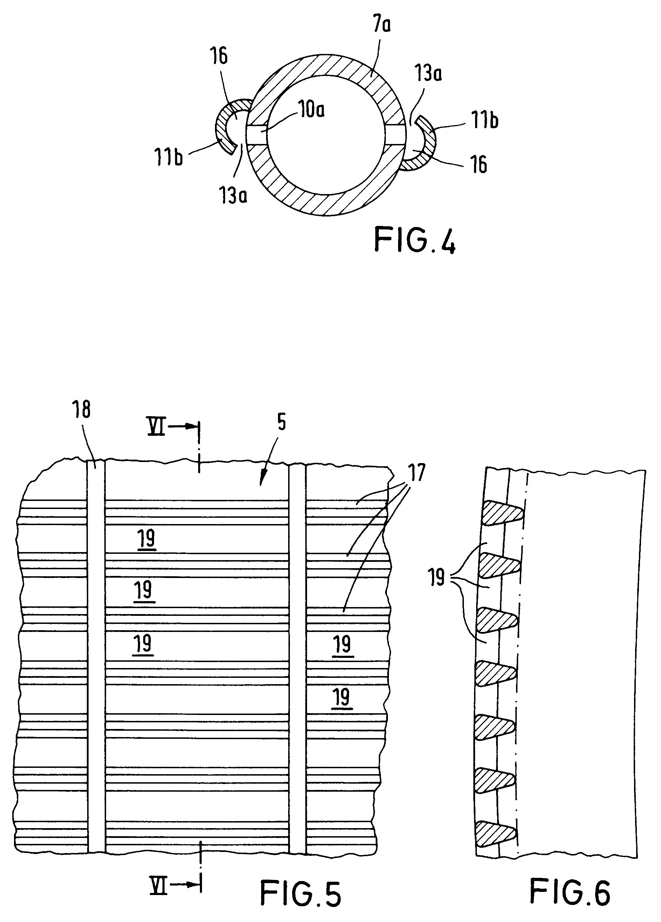

In Fig. 4 ist ein leicht abgewandeltes Ausführungsbeispiel dargestellt. Hier sind die Lochreihen 10 mit den Löchern 10a des zentrischen Gaszuführungsrohres 7a mit Leitblechen 11b unter Bildung eines Austrittspaltes 13a ausgerüstet, wobei die Leitbleche 11b im wesentlichen halbkreisförmig ausgestaltet sind, um einen kleinen Druckausgleichraum 16 zu bilden, in dem sich eine Vergleichmäßigung des Druckes des austretenden Gases über die Gesamthöhe des Gaszuführungsrohres 7a ausbilden kann, bevor das Gas durch den Schlitz 13a tangential ausströmt.

In den Fig. 5 und 6 ist lediglich als Beispiel eine mögliche Gestaltung einer Anströmfläche des Rückhaltekorbes dargestellt. Die Fig. 5 zeigt die Anströmfläche 5 in Aufsicht, während Fig. 6 die gleiche Fläche in Seitenansicht gemäß Linie VI-VI in Fig. 5 wiedergibt. Hier sind horizontale Rückhalteelemente 17 zwischen vertikalen Trägern 18 angeordnet, derart, daß sich vergleichsweise große Anströmöffnungen 19 für das zirkulierende Gas ergeben. Hier sei angemerkt, daß auch andere als die hier zeichnerisch wiedergegebenen Gestaltungen möglich sind.

## Patentansprüche

1.  Vorrichtung zur Beaufschlagung einer Festkörperschüttung mit einem gasförmigen Fluid radial durch die Schüttung von innen nach außen, insbesondere zur inneren Anströmung eines hohlzylindrischen Katalysatorbettes, mit einem zentrischen, vertikalen Gaszuführungsrohr, wobei die Anströmfläche der Schüttung als Korbfläche, Spreizsieb od. dgl., ausgebildet ist,
    dadurch gekennzeichnet,
    daß das vertikale Gaszuführungsrohr (7) mit wenigstens einer vertikal angeordneten Ausströmlochreihe (10) auf Abstand zu der perforierten, zylindrischen Anströmfläche (5) der Schüttung (3) derart vorgesehen ist, daß zwischen Gaszuführungsrohr und Anströmfläche ein zylindrischer Ringraum gebildet ist, und daß im wesentlichen als die ausströmenden Gase ablenkende Leitbleche (11a) ausgebildete Leitelemente (11) an bzw. über der Ausströmlochreihe (10) zur Bildung einer im wesentlichen tangentialen Abströmrichtung in den Ringraum vorgesehen sind.

2.  Vorrichtung nach Anspruch 1,
    dadurch gekennzeichnet,
    daß die Leitbleche (11b) im wesentlichen halbkreisförmig zur Ausbildung eines Druckausgleichraumes (16) profiliert sind.

3.  Vorrichtung nach Anspruch 1 oder 2,
    dadurch gekennzeichnet,
    daß die Ausströmöffnungen (13) einen Anstellwinkel zum jeweiligen Radius bilden.

4.  Vorrichtung nach einem der vorangehenden Ansprüche,
    dadurch gekennzeichnet,
    daß das Gaszuführungsrohr (7) mit einer Mehrzahl von Ausströmlochreihen (10) versehen ist.

5.  Vorrichtung nach einem der vorangehenden Ansprüche,
    dadurch gekennzeichnet,
    daß das Volumen des Ringraumes (8) derart bemessen ist, daß ein Vielfaches der pro Zeiteinheit zuströmenden Gasmenge im Ringraum (8) pro Zeiteinheit rotieren kann.

6.  Vorrichtung nach Anspruch 5 mit einer tangential ausgerichteten schlitzförmigen Abgabeöffnung (13) in den Ringraum (8), wobei die Dimensionierung des Ringraumes (8) und des Schlitzes bzw. der Schlitze (13,13a) mit Hilfe der Funktion

$$\Gamma = \frac{\dot{V}_0}{1} \sqrt{\frac{r_a(r_0 + h_1)}{n \cdot h[r_a - (r_0 + h_1)]}} \qquad [m^2/s]$$

    vorgenommen wird, wobei

$\dot{V}_o$

$$\left[\frac{m^3}{s}\right]$$

das zuströmende Effektivvolumen des Mediums

| | |
|---|---|
| h [m] | Schlitzhöhe |
| $h_1$ [m] | Schlitzhöhe + Konstruktionsmaß, z.B. Dicke des Schlitzabdeckbleches |
| l [m] | Schlitzlänge |
| n [-] | Anzahl der Schlitze |
| $r_a$ [m] | Außenradius des Ringraumes |
| $r_0$ [m] | Außenradius des Gaszuführungsrohres (7) ist, und wobei $\Gamma$ [in m²/s] nicht kleiner als 0,1 und nicht größer als 10 ist und vorzugsweise zwischen 0,5 und 6 liegt. |

## Claims

1. Apparatus for subjecting a solid body fill to the action of a gaseous fluid radially through the fill from the inside outwardly, in particular for producing an internal afflux flow for a hollow-cylindrical catalyst bed, comprising a central vertical gas feed tube, wherein the afflux flow surface of the fill is in the form of a basket surface, a spreader sieve or the like, characterised in that the vertical gas feed tube (7) is disposed with at least one vertically arranged row (10) of discharge flow holes at a spacing relative to the perforated cylindrical afflux flow surface (5) of the fill (3) in such a way that a cylindrical annular space is formed between the gas feed tube and the afflux flow surface, and that there are provided guide elements (11) which are substantially formed as guide plates (11a) for deflecting the issuing gases at or over the row (10) of discharge flow holes, to form a substantially tangential discharge flow direction into the annular space.

2. Apparatus according to claim 1 characterised in that the guide plates (11b) are of a substantially semicircular profile to form a pressure equalisation space (16).

3. Apparatus according to claim 1 or 2 characterised in that the discharge flow openings (13) form an angle of incidence to the respective radius.

4. Apparatus according to one of the preceding claims characterised in that the gas feed tube (7) is provided with a plurality of rows (10) of discharge flow holes.

5. Apparatus according to one of the preceding claims characterised in that the volume of the annular space (8) is such that a multiple of the amount of gas flowing thereto per unit of time can rotate in the annular space (8) per unit of time.

6. Apparatus according to claim 5 having a tangentially directed slit-shaped outlet opening (13) into the annular space (8), wherein the dimensioning of the annular space (8) and the slit or slits (13, 13a) is implemented by means of the function:

$$\Gamma = \frac{\dot{V}_0}{1}\sqrt{\frac{r_a(r_0 + h_1)}{n \cdot h[r_a - (r_0 + h_1)]}} \qquad [m^2/s]$$

wherein:

$$\dot{V}_0$$

$$[m^3/s]$$

is the effective volume in terms of feed flow of the medium,

| | |
|---|---|
| h [m] | is the slit height |
| $h_1$ [m] | is the slit height + structural dimension, for example the thickness of the slit cover plate |
| l [m] | is the slit length |

n [-]     is the number of slits

$r_a$ [m]    is the outside radius of the annular space, and

$r_0$ [m]    is the outside radius of the gas feed tube (7)

and wherein $\Gamma$ [in m$^2$/s] is not less than 0.1 and not greater than 10 and is preferably between 0.5 and 6.

**Revendications**

1. Dispositif pour appliquer à un empilage en vrac de corps solides un fluide gazeux introduit radialement à travers l'entassement, de l'intérieur vers l'extérieur, notamment pour réaliser l'alimentation intérieure d'un lit cylindrique creux de catalyseur, comportant un tube vertical centré d'amenée du gaz, la surface de l'empilage en vrac recevant l'alimentation étant agencée sous la forme d'une surface en forme de panier, un tamis séparateur ou analogue, caractérisé en ce
   que le tube vertical d'amenée de gaz (7) comporte au moins une série (10), disposée verticalement, de trous de sortie à distance de la surface perforée cylindrique d'arrivée de l'alimentation (5) de l'empilage en vrac (3) de telle sorte qu'un espace annulaire cylindrique est formé entre le tube d'amenée du gaz et de la surface d'arrivée de l'alimentation et que des éléments de guidage (11) agencés essentiellement sous la forme de chicanes (11a) déviant les gaz sortant, sont prévus sur ou au-dessus de la rangée de trous de sortie (10) pour l'établissement d'une direction d'évacuation sensiblement tangentielle, dans l'espace annulaire,

2. Dispositif selon la revendication 1, caractérisé en ce
   que les chicanes (11b) sont profilées avec une forme essentiellement semi-circulaire pour la formation d'un espace de compensation de pression (16).

3. Dispositif selon la revendication 1 ou 2, caractérisé en ce
   que les ouvertures de sortie (13) font un angle d'attaque par rapport au rayon respectif.

4. Dispositif selon l'une des revendications précédentes, caractérisé en ce
   que le tube d'amenée de gaz (7) comporte une multiplicité de rangées (10) de trous de sortie.

5. Dispositif selon l'une des revendications précédentes, caractérisé en ce
   que le volume de l'espace annulaire (8) est dimensionné de telle sorte qu'un multiple de la quantité de gaz, qui arrive par unité de temps, peut tourner par unité de temps dans l'espace annulaire (8).

6. Dispositif selon la revendication 5, comportant une ouverture d'évacuation en forme de fente (13) orientée tangentiellement, et qui débouche dans l'espace annulaire (8), le dimensionnement de l'espace annulaire (8) et de la ou des fentes (13,13') étant réalisé à l'aide de la fonction

$$\Gamma = \frac{\dot{V}_0}{1} \sqrt{\frac{r_a(r_0+h_1)}{n.h[r_a-(r_0+h_1)]}} \quad [m^2/s]$$

dans laquelle on a

$\dot{V}_o$

$$[\frac{m^3}{s}]$$

        volume effectif arrivant du fluide

h [m]    hauteur de la fente

$h_1$ [m]   hauteur de la fente + dimension de construction, par exemple épaisseur de la tôle de recouvrement de la fente

l [m]   longueur de la fente

n [-]   nombre des fentes

$r_a$ [m]   rayon extérieur de l'espace annulaire

$r_0$ [m   ] rayon extérieur du tube (7) d'amenée du gaz

et dans laquelle $\Gamma$ [en $m^2$/s] n'est pas inférieure à 0,1 et n'est pas supérieure à 10 et de préférence est comprise entre 0,5 et 6.

FIG.1

FIG.2

FIG.3

FIG.4

FIG.5

FIG.6